# DEMANDE DE BREVET EUROPEEN

(11) **EP 1 136 820 A1**
(43) Date de publication de la demande: **26.09.2001**
(21) Numéro de dépôt: 01400634.0
(22) Date de dépôt: 09.03.2001
(51) Int. Cl.: G01N 27/90

(54) **Dispositif pour effectuer le contrôle d'une pièce par courants de Foucault**

(30) Priorité: 23.03.2000 FR 0003731
(71) Demandeur: Alstom, 75116 Paris (FR)
(72) Inventeur: Tasca, Jean-Pierre, 91700 Sainte Geneviève des Bois (FR)
(74) Mandataire: Gosse, Michel

(57) **Abrégé**

Dispositif pour effectuer le contrôle d'une pièce par courants de Foucault, comprenant au moins un pont de mesure ayant une bobine active (BA) qui est connectée entre une première borne (I+)et une seconde borne (S) et un circuit de référence (BR) qui est connecté entre ladite seconde borne (S) et une troisième borne (I-), lesdites première et troisième bornes étant destinées à être connectées à un générateur de tension alternative (G) de telle manière qu'un champ magnétique alternatif est généré par la bobine active dans la pièce à contrôler afin de détecter, par analyse d'une tension de sortie du dispositif, une variation de l'impédance de la bobine active lorsqu'elle passe sur un défaut de la pièce à contrôler, caractérisé en ce que le circuit de référence (BR) est une bobine de référence identique à la bobine active (BA), en ce que la première borne (I+) et la troisième borne (I-) sont destinées à recevoir des tensions appliquées par le générateur de tension alternatif (G) qui sont de valeurs égales et de signe opposé par rapport à un point neutre (GN) dudit générateur, la tension de sortie étant la tension (Us) lue entre ladite seconde borne (S) et ledit point neutre (GN), et en ce que la bobine de référence (BR) est électromagnétiquement isolée de la pièce à contrôler.

## Description

L'invention concerne un dispositif pour effectuer le contrôle d'une pièce par courants de Foucault, comprenant au moins un pont de mesure ayant une bobine active qui est connectée entre une première borne et une seconde borne et un circuit de référence qui est connecté entre ladite seconde borne et une troisième borne, lesdites première et troisième bornes étant destinées à être connectées à un générateur de tension alternative de telle manière qu'un champ magnétique alternatif est généré par la bobine active dans la pièce à contrôler afin de détecter, par analyse d'une tension de sortie du dispositif, une variation de l'impédance de la bobine active lorsqu'elle passe sur un défaut de la pièce à contrôler.

Les contrôles non destructifs par courants de Foucault sont très utilisés dans l'industrie pour vérifier l'état mécanique de pièces métalliques, car ils permettent de détecter des défauts de régularité comme des amorces de ruptures ou des défauts de l'état de surface de ces pièces. En provoquant avec une bobine active un champ magnétique alternatif dans une pièce métallique, il naît dans cette pièce des courants qui modifient le champ magnétique induit par la bobine, et cette modification du champ magnétique est reflétée par une modification de l'impédance de la bobine active.

Par exemple, dans les générateurs de vapeur de centrales nucléaires, les tuyauteries qui fonctionnent dans des conditions de température et de pression sévères ont besoin d'être régulièrement contrôlées. De tels générateurs comportent typiquement une plaque de supportage dans laquelle sont insérés une multitude de tubes en forme de U qui sont le siège de l'échange de chaleur. De tels tubes se prêtent à un contrôle par courants de Foucault. En effet, leur accessibilité permet d'y introduire une sonde comprenant une bobine active qui se déplace tout en générant un champ magnétique alternatif. Simultanément, une analyse d'une tension de sortie permet de détecter une variation de l'impédance de la bobine active lors du passage de celle-ci sur un défaut de la pièce. Dans de tels contrôles, les mesures d'une même portion de tube sous plusieurs fréquences d'excitations sont particulièrement utiles pour évaluer un ordre de grandeur de la taille du défaut de géométrie que l'on souhaite mettre en évidence. Ce type de mesure est tout particulièrement utile pour le contrôle des portions de tubes qui sont insérées dans la plaque de supportage, puisqu'elle permet de distinguer l'influence de la plaque de celle du tube en lui même.

Les dispositifs de contrôle classiques comprennent selon le cas, soit un seul pont pour effectuer des mesures en mode dit absolu, soit plusieurs ponts pour effectuer des mesures en mode différentiel et en mode absolu. D'une manière générale, un pont de mesure comporte une première borne, à laquelle est connectée la bobine active, qui est dite borne d'injection positive ; une deuxième borne, à laquelle sont connectés la bobine active et le circuit de référence, qui est dite borne de sortie ; et une troisième borne, à laquelle est connecté le circuit de référence, qui est dite borne d'injection négative.

Pour un dispositif de contrôle comprenant un seul pont, et fournissant donc une seule tension de sortie, la bobine active qui est placée dans un corps de sonde est connectée en série avec un circuit de référence, de manière à constituer le pont de mesure.. Le pont ainsi constitué est alimenté entre ses bornes d'injection positive et négative par un générateur de tension alternative, et la tension de sortie du dispositif est la tension lue entre la borne de sortie et la borne d'injection négative, qui est le plus souvent connectée à la masse. Dans un tel dispositif, le circuit de référence classiquement utilisé est une résistance, dont l'impédance à la fréquence de travail est proche de celle de la bobine active. Ainsi, la tension de sortie a une forme qui est proche de la demi tension d'alimentation lorsque le pont est en équilibre, et qui s'en éloigne sensiblement lorsque le pont se déséquilibre. Pour effectuer un contrôle en mode absolu, on déplace la sonde dans un tube à contrôler, et la tension de sortie qui a une certaine forme (amplitude et déphasage) pour une portion de tube saine s'éloigne de cette forme lors du passage de la bobine active sur un défaut.

Du point de vue des ordres de grandeur, il convient de noter que la tension de sortie obtenue a une valeur moyenne qui est de l'ordre de quelques volts, alors que les variations qui apparaissent sont de quelques millivolts. Un appareillage de traitement du signal est alors indispensable pour filtrer la tension de sortie et en amplifier les composantes qui sont significatives pour mettre en évidence une variation de l'impédance de la bobine. Pour ce faire, on a recours à un démodulateur synchrone capable de travailler en temps réel et de fournir des données qu'un ordinateur enregistre lui aussi en temps réel.

Le brevet des Etats-Unis 4 635 832 décrit un procédé et un dispositif de coulée de métal en fusion à partir d'une poche de coulée recouverte d'une couche de laitier vers un panier de coulée. Le fond de la poche de coulée est reliée au panier de coulée par un tube par lequel s'écoule le métal fondu. Le document décrit un circuit de mesure permettant de détecter un passage de laitier dans le tube reliant la poche au panier de coulée : le tube est entouré de deux bobines reliées en série et s'étendant l'une après l'autre le long du tube. Les bobines sont alimentées par le secondaire d'un transformateur comportant lui-même deux bobines en série, formant un pont de Wheastone.

La diagonale de mesure est prise entre le point de liaison des deux bobines entourant le tube et le point de liaison des deux bobines du secondaire du transformateur. Lors du passage éventuel de laitier dans le tube reliant la poche au panier de coulée, on observe une variation du signal de sortie par modification de l'impédance de la bobine affectée par ce passage. Cependant, par mutuelle inductance entre les deux bobines, l'autre bobine est également affectée et ne peut donc pas constituer une bobine de référence.

La présente invention propose un dispositif dans lequel, en l'absence de défaut, le signal de sortie est proche de 0 et où une bobine de référence est soustraite aux influences de la pièce à contrôler.

L'invention a ainsi pour objet un dispositif pour effectuer le contrôle d'une pièce par courants de Foucault, comprenant au moins un pont de mesure ayant une bobine active qui est connectée entre une première borne et une seconde borne et un circuit de référence qui est connecté entre ladite seconde borne et une troisième borne, lesdites première et troisième bornes étant destinées à être connectées à un générateur de tension alternative de telle manière qu'un champ magnétique alternatif est généré par la bobine active dans la pièce à contrôler afin de détecter, par analyse d'une tension de sortie du dispositif, une variation de l'impédance de la bobine active lorsqu'elle passe sur un défaut de la pièce à contrôler, caractérisé en ce que le circuit de référence est une bobine de référence identique à la bobine active, en ce que la première borne et la troisième borne sont destinées à recevoir des tensions appliquées par le générateur de tension alternatif qui sont de valeurs égales et de signe opposé par rapport à un point neutre dudit générateur, la tension de sortie étant la tension lue entre ladite seconde borne et ledit point neutre, et en ce que la bobine de référence est électromagnétiquement isolée de la pièce à contrôler.

Selon une autre caractéristique, le dispositif comporte plusieurs ponts de mesure ayant des premières bornes respectives communes, des troisièmes bornes respectives communes, et des secondes bornes différentes, de telle sorte à obtenir une tension de sortie pour chaque pont de mesure qui est lue entre la seconde borne du pont correspondant et le point neutre du générateur de tension alternative.

Selon une première réalisation, la ou les bobines actives sont situées dans un corps de sonde, la ou les bobines de référence étant hors de la sonde et éloignées de la pièce à contrôler.

Selon une seconde réalisation, la ou les bobines actives et la ou les bobines de référence sont situées dans un unique corps de sonde, les bobines de référence étant isolées par un blindage électromagnétique.

Selon une autre caractéristique, la seconde borne de chaque pont de mesure est connectée à au moins un amplificateur opérationnel.

Avec cet agencement, la tension de sortie est très proche de zéro si le pont est en équilibre puisqu'elle est proche de la somme des tensions d'injections qui sont opposées à un instant donné. De cette façon, la tension de sortie obtenue ne nécessite pas de filtrage particulier si bien qu'elle peut être amplifiée directement, avant démodulation. Avec un tel dispositif, on peut obtenir un rapport signal/bruit brut de l'ordre de 40dB, ce qui représente une amélioration significative par rapport aux 25dB que fournit un dispositif classique.

Un autre avantage du dispositif selon l'invention est qu'il est capable de fonctionner à plusieurs fréquences sans avoir à changer le circuit de référence. Cette caractéristique est d'autant plus intéressante qu'il existe sur le marché des ensembles comprenant un générateur de tension et un démodulateur synchrone capables de travailler en temps réel sous plusieurs fréquences : avec un tel ensemble, on peut injecter dans le dispositif une tension alternative composée de plusieurs tensions de fréquences différentes et démoduler chaque tension de sortie en plusieurs tensions correspondant chacune à l'une des fréquences injectées. Comme on le voit, l'association d'un tel ensemble avec le dispositif selon l'invention permet d'effectuer au cours d'un seul passage de la sonde dans la pièce, des mesures à plusieurs fréquences différentes.

Des exemples de réalisation du dispositif selon l'invention sont explicités ci-après et illustrés par les figures annexées.

La figure 1 est une vue d'ensemble d'un appareillage dans lequel est monté le dispositif selon l'invention

La figure 2 montre de façon schématique un premier exemple de réalisation du dispositif selon l'invention.

La figure 3 montre de façon schématique un deuxième exemple de réalisation du dispositif selon l'invention.

La figure 4 montre de façon schématique un troisième exemple de réalisation du dispositif selon l'invention.

La figure 5 montre de façon schématique un quatrième exemple de réalisation du dispositif selon l'invention.

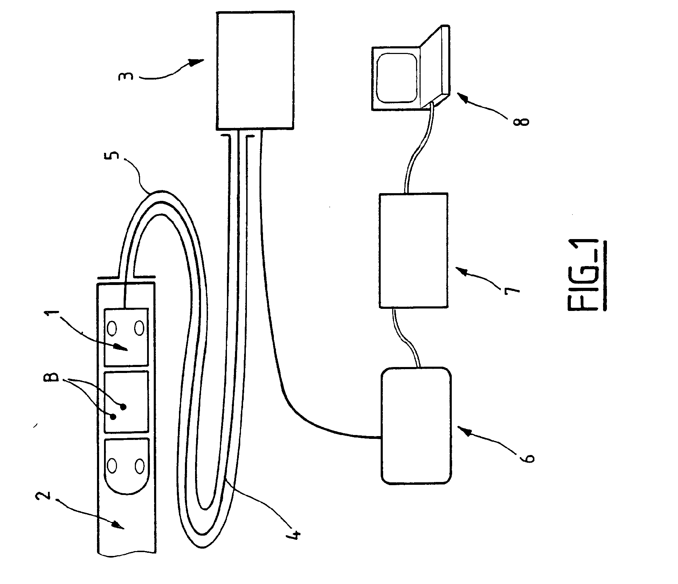

Sur la figure 1, le dispositif pour effectuer des contrôles de pièces par courants de Foucault comporte une sonde 1 dans laquelle est disposée au moins une bobine, dans le cas présent deux bobines. La sonde 1 est déplacée en translation et en rotation dans un tube 2 à contrôler, par un boîtier 3 au moyen d'une première gaine 4 comprenant des câbles électriques et qui est rigidement liée d'une part au corps de sonde 1 et d'autre part à une partie mobile du boîtier 3. Cette première gaine 4 coulisse à l'intérieur d'une gaine 5 qui est rigidement liée d'une part au tube à contrôler et d'autre part au bâti du boîtier 3. Dans cet agencement, le boîtier 3 anime sa partie mobile d'un mouvement de translation et de rotation, et ce mouvement est transmis à la sonde 1 par l'intermédiaire de la gaine 4, si bien que la trajectoire d'une bobine active de la sonde est une hélice qui parcourt toute la surface de la portion de tube à contrôler. Ce boîtier 3 est connecté à un boîtier 6 qui comprend des amplificateurs opérationnels et qui transmet la tension d'excitation à la sonde via le boîtier 3, et reçoit de celle-ci chaque tension de sortie qu'il amplifie. Ce boîtier 6 qui comprend éventuellement chaque bobine de référence est connecté à un boîtier 7 qui comprend un générateur de tension alternative et un démodulateur synchrone. Avec cet agencement, le boîtier 6 reçoit du boîtier 7 la tension d'injection du dispositif et lui fournit chaque tension de sortie amplifiée, pour démodulation. Enfin, un ordinateur 8 est connecté au boîtier 7 de manière à piloter le contrôle et à enregistrer les données fournies par le démodulateur synchrone contenu dans le boîtier 7.

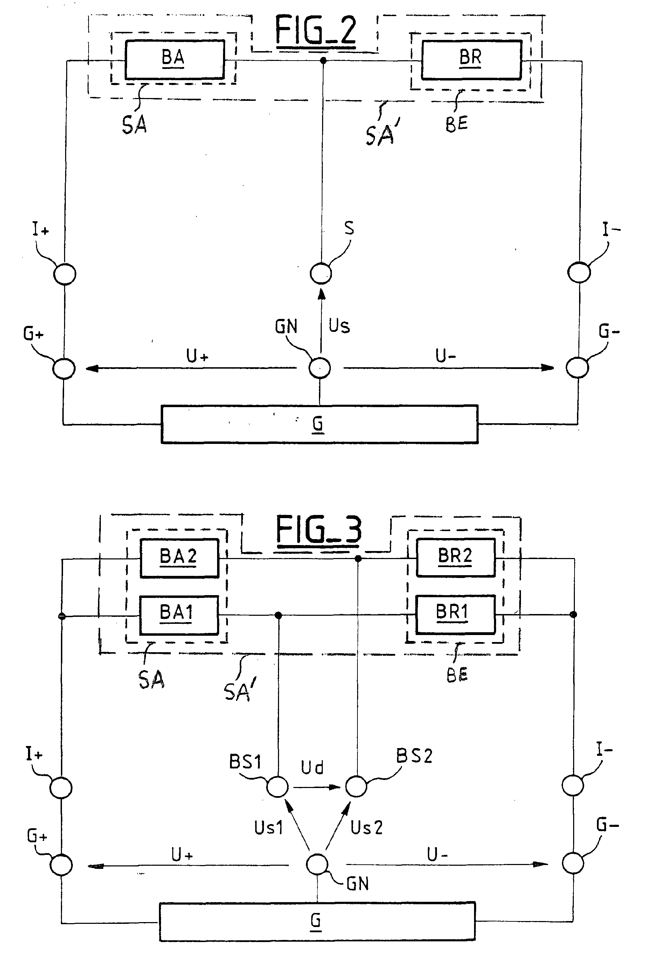

La figure 2 décrit les éléments du dispositif selon un mode de réalisation particulier de l'invention : un générateur de tension G applique une tension alternative U+ entre sa borne positive G+ et sa borne neutre GN et une autre tension alternative U - entre sa borne négative G- et sa borne neutre GN. Les tensions alternatives U+ et U- sont égales et en opposition de phase. Un pont de mesure comporte principalement les bornes I+, I- et BS, les bornes I+ et I- étant respectivement connectées aux bornes G+ et G- du générateur, ce pont de mesure comporte encore une bobine active BA connectée d'une part à la borne I+ et d'autre part à la borne S, ainsi qu'une bobine de référence BR connectée d'une part à la borne S et d'autre part à la borne I -. Comme on le voit sur la figure, la tension de sortie Us est lue entre les bornes S du pont et le point neutre GN du générateur de tension.

Lorsque la sonde SA qui comporte la bobine BA est déplacée dans le tube à contrôler, le pont a une certaine tension de déséquilibre faible, qui reste constante (en déphasage et en amplitude) tant que la sonde se trouve sur une zone saine de la pièce, et qui change lorsque la sonde est à proximité d'un défaut de la pièce.

La bobine de référence BR est située hors de la sonde SA et éloignée de la pièce à contrôler de façon à l'isoler électromagnétiquement de la pièce à contrôler.

On peut également placer la bobine de référence BR dans la sonde SA' et l'isoler électromagnétiquement par un blindage électromagnétique BE.

La figure 3 donne le câblage d'un dispositif selon l'invention pour faire simultanément des mesures en mode différentiel et des mesures en mode absolu. Ce dispositif comporte principalement deux ponts de mesure qui sont connectés en parallèle à un même générateur de tension alternative. Plus particulièrement, le générateur G a sa borne de sortie positive G+ connectée à la borne d'injection positive commune I+ et sa borne de sortie négative G- connectée à la borne d'injection négative commune I-. Le premier pont est composé d'une bobine active BA1 connectée d'une part à la borne d'injection positive commune I+ et d'autre part à une borne de sortie BS1 et d'une bobine de référence BR1 connectée d'une part à la borne de sortie BS1 et d'autre part à la borne d'injection négative I-. Selon un agencement similaire, un second pont est composé des bobines BA2 et BR2, connectées aux bornes d'injection l+, I-, et à BS2 qui est la borne de sortie de ce second pont. Ces deux ponts qui sont connectés aux bornes de sortie BS1 et BS2, permettent de former avec le point neutre GN du générateur trois tensions de sortie : Us1 et Us2 qui sont les tensions de sortie absolues de chaque pont, et Ud qui est la tension différentielle des deux ponts. Us1 est donc la tension lue entre S1 et GN, Us2 est la tension lue entre S2 et GN, et Ud est la tension lue entre S1 et S2.

Comme cela a été dit précédemment, dans un tel dispositif, les deux bobines actives BA1 et BA2 sont placées côte à côte dans un corps de sonde SA : si chacune d'elle se trouve sur une zone saine de la pièce en cours de contrôle, la tension différentielle Ud est très proche de zéro ; si l'une est sur une zone saine et l'autre sur une zone comportant un défaut, le pont est déséquilibré, et la tension Ud devient non nulle. Ici encore, les bobines de référence BR2 et BR1 sont hors du corps de sonde et éloignées de la pièce à contrôler ou bien sont situées dans le corps de sonde SA' et isolées par un blindage électromagnétique BE.

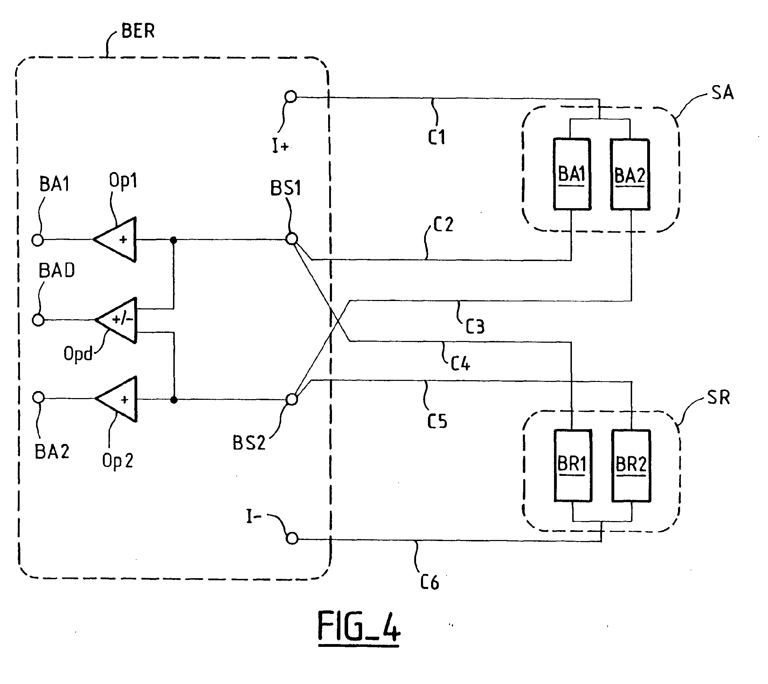

Dans la figure 4, on a représenté de façon schématique la réalisation d'un dispositif selon l'invention comportant deux ponts de mesure connectés en parallèle, dans le cas où les bobines de référence ne sont pas situées dans le corps de sonde comportant les bobines actives : les longueurs de câbles ont été choisies de manière à réduire l'effet des perturbations électromagnétiques sur le dispositif ; et les tensions de sortie sont amplifiées. Dans ce dispositif, on a placé les deux bobines actives BA1 et BA2 dans un premier corps de sonde SA , et les deux bobines de référence BR1 et BR2 dans un second corps de sonde SR, l'ensemble des bornes de sortie et d'injection ainsi que la partie amplification étant placés dans un boîtier d'émission et de réception BER, lequel boîtier correspondant au boîtier 6 de la figure 1. Selon cet agencement, le corps de sonde SA est relié au boîtier BER par une première gaine comportant les câbles C1, C2 et C3, et de façon similaire, le corps de sonde SR est relié au boîtier BER par une seconde gaine comportant les câbles C4, C5 et C6.

Plus particulièrement, le câble C1 est connecté entre la borne d'injection positive du dispositif I+, située dans le boîtier BER et les bobines actives BA1 et BA2 situées dans le corps de sonde SA. Le câble C2 est connecté entre la bobine active BA1 et la borne de sortie BS1 située dans le boîtier BER. Le câble C3 est connecté entre la bobine active BA2 et la borne de sortie BS2 qui est située dans le boîtier BER. De façon similaire, les câbles C4 et C5 relient respectivement les bobines de référence BR1 et BR2 à leurs bornes de sortie BS1 et BS2. Enfin, le câble C6 est connecté entre les bobines de référence BR1 et BR2 situées dans le corps de sonde SR, et la borne d'injection négative I- située dans le boîtier BER. Selon cet agencement, on obtient donc un dispositif qui comporte deux ponts de mesure connectés en parallèle entre les bornes d'injection du dispositif, et pour lequel les longueurs de câbles utilisées pour connecter le corps de sonde comprenant les sondes actives sont identiques à celles utilisées pour connecter le corps de sonde comprenant les bobines actives, puisque les câbles C1, C2, C3, C4, C5, et C6 ont tous la même longueur.

L'intérêt d'un tel montage est que pour des raisons pratiques, lors des procédures de contrôle, le corps de sonde SA comportant les bobines actives est situé à une dizaine mètres des dispositifs de pilotage et d'analyse du signal qui sont connectés au boîtier BER, et il est alors utile de placer le corps de sonde SR comportant les bobines de référence à la même distance. En effet, en plaçant le corps de sonde comportant les bobines de référence à la même distance du boîtier d'émission réception et avec la même longueur de câblage que pour le corps de sonde comportant les bobines actives, on annule l'effet des perturbations électromagnétiques subies par le dispositif au niveau de la borne de sortie différentielle amplifiée BAD du dispositif.

Du point de vue de l'amplification, on a représenté les amplificateurs opérationnels Op1, Op2 et Opd ayant leurs entrées respectivement connectées aux bornes BS1, BS2, BS1 et BS2, et leurs sorties respectives connectées aux bornes BA1, BA2 et BAD. De cette façon, les tensions de sortie amplifiées peuvent être directement exploitées par le démodulateur asynchrone depuis les bornes BA1, BA2 et BAD.

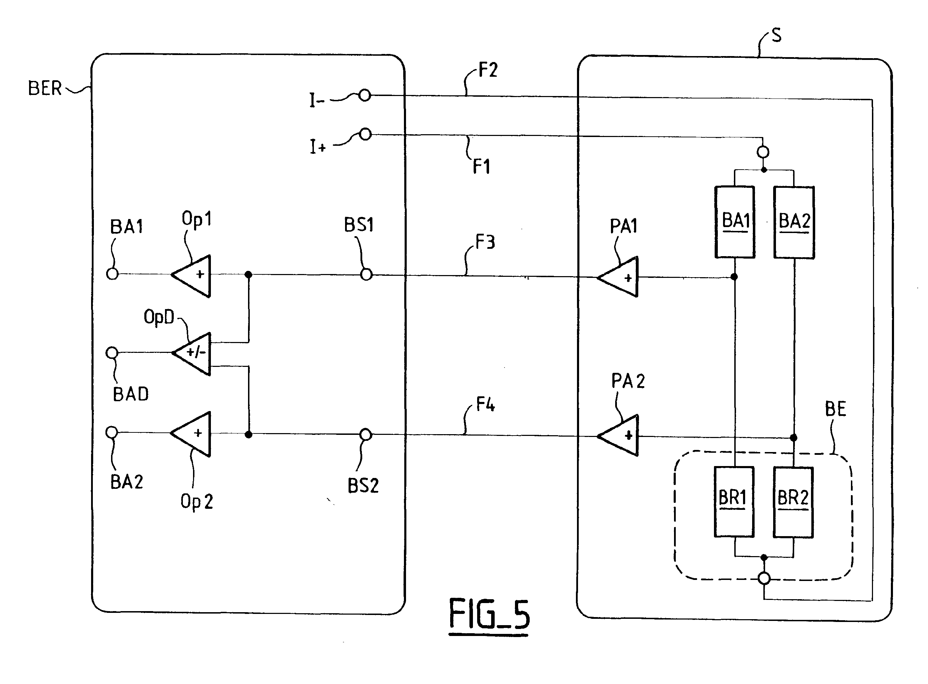

La figure 5 illustre de façon schématique la réalisation d'un dispositif selon l'invention dans lequel on a intégré la plus grande partie de composants dans le corps de sonde, ce qui permet de réduire les perturbations électromagnétiques tout en conservant un câblage qui reste simple puisqu'il ne comporte que quatre câbles de grande longueur au lieu des six que comporte le dispositif illustré par la figure 4, ces câbles étant de surcroît contenus dans une gaine unique.

Dans cette réalisation, on a placé dans un unique corps de sonde S : deux bobines actives BA1 et BA2 ; deux bobines de référence BR1 et BR2 isolées par un blindage électromagnétique BE ; ainsi que deux amplificateurs opérationnels PA1 et PA2 destinés à effectuer une préamplification des tensions de sortie de la sonde. Cette sonde est reliée à un boîtier d'émission-réception par des câbles F1, F2, F3, et F4.

Plus particulièrement, le câble F1 est connecté entre les bobines actives BA1 et BA2, et une borne d'injection positive du dispositif l+ située dans le boîtier BER. De façon similaire, le câble F2 est connecté entre les bobines de référence BR1 et BR2 et une borne d'injection négative I - du dispositif située dans le boîtier BER. L'amplificateur opérationnel PA1 est connecté d'une part aux bobines BA1 et BR1, et d'autre part au câble F3 qui est connecté à la borne de sortie BS1 située dans le boîtier BER. De façon similaire, l'amplificateur PA2 est connecté d'une part aux bobines BA2 et BR2 et d'autre part au câble F4 qui est connecté à la borne de sortie BS2 située dans le boîtier BER. Selon cet agencement, on obtient donc un dispositif qui comporte deux ponts de mesure connectés en parallèle entre les bornes d'injection du dispositif.

Les intérêts d'un tel agencement sont multiples : les longueurs de câbles utilisées pour connecter les bobines actives et les bobines de référence sont identiques ce qui permet de réduire l'effet des perturbations électromagnétiques que subit le dispositif, et de plus tous les câbles sont contenus dans une même gaine ; l'intégration des bobines de référence dans le corps de sonde permet d'annuler les effets de dérive thermique ; et enfin, la préamplification au sein de la sonde des tensions de sortie permet d'améliorer encore le rapport signal sur bruit du dispositif.

Du point de vue de l'amplification des tensions de sortie, on retrouve comme dans le montage illustré par la figure 4, trois amplificateurs opérationnels Op1, Op2 et OpD situés dans le boîtier BER ayant leurs entrées respectives connectées aux bornes BS1, BS2, BS1 et BS2 et leurs sorties respectives connectées aux bornes BA1, BA2 et BAD. Ces amplificateurs permettent d'obtenir des tensions de sortie amplifiées qui sont directement exploitables par un démodulateur asynchrone, depuis les bornes BA1, BA2 et BAD.

L'invention n'est pas uniquement réservée aux réalisations décrites ci-dessus, et pourra aussi s'appliquer au contrôle par courant de Foucault de toute pièce dont la surface présente une épaisseur constante ou des qualités géométriques adéquates. Ainsi, l'invention peut par exemple très bien s'appliquer au contrôle d'une plaque métallique d'épaisseur constante.

## Revendications

1. Dispositif pour effectuer le contrôle d'une pièce par courants de Foucault, comprenant au moins un pont de mesure ayant une bobine active (BA) qui est connectée entre une première borne (I+)et une seconde borne (S) et un circuit de référence (BR) qui est connecté entre ladite seconde borne (S) et une troisième borne (I-), lesdites première et troisième bornes étant destinées à être connectées à un générateur de tension alternative (G) de telle manière qu'un champ magnétique alternatif est généré par la bobine active dans la pièce à contrôler afin de détecter, par analyse d'une tension de sortie du dispositif, une variation de l'impédance de la bobine active lorsqu'elle passe sur un défaut de la pièce à contrôler, **caractérisé en ce que** le circuit de référence (BR) est une bobine de référence identique à la bobine active (BA), en ce que la première borne (I+) et la troisième borne (I-) sont destinées à recevoir des tensions appliquées par le générateur de tension alternatif (G) qui sont de valeurs égales et de signe opposé par rapport à un point neutre (GN) dudit générateur, la tension de sortie étant la tension (Us) lue entre ladite seconde borne (S) et ledit point neutre (GN), et en ce que la bobine de référence (BR) est électromagnétiquement isolée de la pièce à contrôler.

2. Dispositif selon la revendication 1, comportant plusieurs ponts de mesure ayant des premières bornes (I+) respectives communes, des troisièmes bornes (I-) respectives communes, et des secondes bornes (BS1, BS2) différentes, de telle sorte à obtenir une tension de sortie (Us1, Us2) pour chaque pont de mesure qui est lue entre la seconde borne (BS1, BS2) du pont correspondant et le point neutre (GN) du générateur de tension alternative.

3. Dispositif selon l'une des revendications 1 ou 2, **caractérisé en ce que** la ou les bobines actives (BA ; BA1, BA2) sont situées dans un corps de sonde (SA), la ou les bobines de référence (BR ; BR1, BR2) étant hors de la sonde et éloignées de la pièce à contrôler.

4. Dispositif selon l'une des revendications 1 ou 2, **caractérisé en ce que** la ou les bobines actives (BA ; BA1, BA2) et la ou les bobines de référence (BR ; BR1, BR2) sont situées dans un unique corps de sonde (SA', S), les bobines de référence étant isolées par un blindage électromagnétique (BE).

5. Dispositif selon l'une des revendications 2 à 4, **caractérisé en ce que** la seconde borne de chaque pont de mesure est connectée à au moins un amplificateur opérationnel (Op1, Op2 ; PA1, PA2).

6. Dispositif selon la revendication 5 dans lequel chaque bobine active (BA1, BA2), chaque bobine de référence (BR1, BR2) ainsi que des amplificateurs opérationnels (PA1, PA2) sont intégrés dans un même corps de sonde (S).
